# EUROPEAN PATENT APPLICATION

(11) **EP 3 402 238 A1**
(43) Date of publication of application: **14.11.2018**
(21) Application number: 17000798.3
(22) Date of filing: 09.05.2017
(51) Int. Cl.: H04W 12/06, H04W 8/20, H04L 29/06, H04W 12/08

(54) **EFFICIENT USER AUTHENTICATIONS**

(71) Applicant: Giesecke+Devrient Mobile Security GmbH, 81677 München (DE)
(72) Inventor: Larsson, Thomas, 125 56 Älvsjö (SE)

(57) **Abstract**

The present invention is directed towards a method for efficient user authentications in a mobile network, which allows the user to provide personal user data in a very convenient way such as person user data can be re-used independent of any prior use of such data. Personal user data refers to information describing the user as such and not merely describing an abstract entity. The present invention is furthermore directed towards a system for efficient user authentication being arranged to perform the suggested method as well as a computer program product comprising instructions, which implement the suggested method.

## Description

The present invention is directed towards a method for efficient user authentications in a mobile network, which allows the user to provide personal user data in a very convenient way such that person user data can be re-used independently of any prior use of such data. Personal user data refers to information describing the user as such and not merely describing an abstract entity. The present invention is furthermore directed towards a system for efficient user authentication being arranged to perform the suggested method as well as a computer program product comprising instructions, which implement the suggested method.

WO 2017 041 562 A1 teaches a method for identifying a user identity of a terminal device, comprising receiving a user identity identification request initiated by a third party with regard to a terminal device. Furthermore it is suggested that the identity query request carries an IP address. This solution suggests identity identifiers, such as MSISDN and IMSI amongst others.

WO 2015 121 263 A1 teaches a method and system for determining that a SIM and a further client are co-located, furthermore MSISDN and IMSI are involved.

EP 3 035 724 A1 teaches a system and a method for managing subscriber mobile devices, wherein the involved data comprises MSISDN and IMSI amongst others.

In separate 3GPP technical specifications it is referred to the remote provisioning of data for UICC or eUICC. However, the 3GPP standards refer merely to UICC as such and do typically not refer to a user. Consequently, it is known art to address a specific device by for instance using its MSISDN or an IP address. There is a need for providing services, which refer to the user as such and do not merely refer to a device the user operates. Hence, authentication needs not merely to be performed by a mobile phone or an end terminal but rather by the user himself.

It is commonly known to provide mobile terminals, especially smartphones, with a so-called eUICC or a UICC, which allows for installing software being able to run personal services or provide mobile phones specific data. For instance a profile installer credential is a data item required to exist within an eUICC so that a profile downloaded from an external entity can be decrypted and installed on the eUICC.

The known art approaches refer to subscriber services, which allow the interaction between a mobile phone and respective service providers, for instance a mobile network operator MNO. In several application scenarios the user himself has to authenticate his identity regarding several services, which needs to be performed for each service, respectively. Upon initialization of a mobile phone it might be required to download an eSIM and prior to this to authenticate himself for being allowed to download such an eSIM. Upon further downloads of further software the user has to authenticate himself again. Currently, there is a need for a service allowing the user himself, to authenticate his personal identity, which is not to be restricted towards the identity of the mobile phone as such.

Consequently, it is the object of the present invention to provide a method for efficient user authentications in a mobile network, which allows that the user himself can be authenticated regarding several services with low effort in a very secure way. It is furthermore an object of the present invention to provide a respectively arranged system for efficient user authentications in a mobile network as well as a computer program product providing instructions for performing the suggested method or operating the suggested system.

The object is solved according to features of independent claim 1. Further advantages are provided by dependent claims.

Accordingly, a method for efficient user authentications in a mobile network is suggested, comprising the steps of requesting an initialization of a secure element of a mobile device, providing personal user data for authentication of an initialization process of the secure element, and performing the initialization process upon positive authentication, wherein the personal user data provided for authentication of the initializing process is stored and re-used for further authentication processes.

The present invention provides the advantage that user authentication can be performed efficiently as the user has to provide his data once and further authentication processes can be performed under usage of such data. The authentication of a user in general requires a verification of an identity of the user such that a service, which communicates with the user's end device can be sure that the user who intends to be a specific person is really the supposed person. Such user authentication is typically performed using a mobile network, wherein the user operates a mobile phone and requests services from different service providers. The user authentication according to the present invention refers to the user as such and does not merely refer to the user's end device. Consequently, according to the present invention a personal user data is suggested, which differs from known device identities in that such personal user data indeed refers to the person as such. In contrast to this, MSISDN refers merely to a mobile phone but does not address the specific service requester in the sense of a natural person. Consequently, according to the present invention personal user data describes a natural person and does not merely refer to the operated smartphone.

A mobile network may be any telecommunications network, wherein the mobile end device communicates over the mobile network, for instance with a location static entity, such as a server. The server may be a data storage, which provides services for downloading personalization commands to the mobile device. The skilled person recognizes that the mobile network comprises further components, which establish a communication between the mobile device and a further entity, which provides initialization services. Consequently, requesting an initialization of a secure element of a mobile device refers to an initialization system, from which an initialization can be requested. Furthermore, the step of providing personal user data is accomplished using the mobile device, which transmit personal user data to the initialization system. The performance of the initialization process can likewise be accomplished under usage of the initialization system. The same system provides means for authentication of the natural user. Consequently, the steps to be performed according to the suggested method define an interaction between a mobile device and the initialization system. Such an initialization system may for instance be a service provider or simply a server. The server may provide initialization commands such as eSIM downloads or eS-IM profile download.

Requesting an initialization of a secure element may provide a step of requesting a software or at least data which serves to initially install the secure element or load profile data on the secure element describing the user. Accordingly, the request may be a communication initiated by the mobile device towards the initialization server or system. It may also be preferable to omit the step of requesting an initialization and to push software towards the mobile device. Consequently, the request of an initialization of a secure element can likewise be performed by the initialization system, which identifies that a secure element needs to be installed for the first time. In general, the initialization of the secure element refers to the initialization process to be performed once the secure element is operated for the first time. This may likewise refer to the first operation by a natural user. Consequently, upon delivery of the mobile device and the secure element to a natural user the user switches the mobile device on and performs the initialization.

For doing so, the natural user provides user data for authentication of an initialization process of the secure element. This can be performed by any input device being provided by the mobile device. In case the personal user data is a password this can be typed into the mobile device, wherein, for instance, a photo of the natural user can be taken by a camera. The provided personal user data is then transmitted to the initialization system, which authenticates the user. This may likewise refer to a registering of the user such the personal user data is provided for registering the user at the initialization system.

In case the natural user is positively authenticated via his mobile device, the initialization process of the user end device and respectively the secure element is performed. Performing the initialization process may comprise transmitting initialization commands towards the mobile phone and especially the secure element. Such commands may be formed by a respective software or at least data intended for mobile device initialization. In case the authentication process fails, the user is requested to provide personal user data again, which is performed iteratively such that the authentication process will result in a positive authentication. In case no positive authentication can be reached the method is terminated.

According to the present invention the disadvantage is overcome that regarding further services the user has to be authenticated again. According to the present invention the authentication can be performed by the mobile device using the secure element as such, which does not require further verification of the user. Hence, the mobile device may access the personal user data, which is stored on the mobile device for respectively on the secure element and may use this information for further authentication processes. This refers to a single further authentication process likewise. In general, this procedure provides the advantage that the data being used for the first initialization of the mobile device and respectively the secure element, namely the personal user data, is not discarded but is rather stored, preferably on a server, the mobile device, the secure element and/or the UICC and used for further authentication processes. Consequently, the natural user needs to input personal user data once and the system or the mobile device, respectively, reuses such information.

In case the end user installs further applications on his mobile device the mobile device remembers personal user data being provided during initialization and may support the authentication of the user at further services. Hence, it is possible that the user initializes his mobile device and authenticates himself. During the lifecycle of the mobile device the personal user data may be stored such the provision of such data is required merely once during the complete lifecycle. This supports the user as well as the mobile device and provides the personal user data during respective situations such that the technical effort is decreased. Furthermore, such a method is more secure as errors are prevented during the input of personal user data, which can be reduced to a single provision of personal user data for authentication.

A further advantage of the present invention is that the personal user data can be stored on a secure element such as eUICC or iUICC. Consequently, the mobile device does not use any unsecured storage but this very private data is secured against attackers.

The further authentication processes do not necessarily correlate to the initial authentication process. Accordingly, it might be the case that the provision of personal user data is performed during an initialization of the secure element and further authentication processes refer to any application being installed on the mobile device. Consequently, the user may likewise obtain services provided by a bank via online banking. As the user has already provided personal user data during the initialization of the secure element, such data does not need to be provided later on during online banking.

According to an aspect of the present invention personal user information comprises a picture, a social security number, a passport scan, a passport number, a password, a fingerprint, and/or biometric data. This provides the advantage that the authentication is not performed as known from the prior art using hardware specific identities but rather user specific identities are provided. Consequently, the user can use such data later on and can gain access to personalized services, which require that the user himself authenticates his identity. For instance, it is commonly known that a MSISDN is provided for a mobile device, which serves for addressing the mobile device. However, according to the present invention such hardware-specific identifiers are not used but rather the personal user data is involved, which serves for further authentication processes such that they can be used by the user. The user can be identified according to the provided personal user data, which represents a novel approach towards authentication and initialization regarding a secure element.

According the a further aspect of the present invention the personal user data is stored on a server, the mobile device, the secure element and/ or the UICC. This provides the advantage that the personal user data being provided during the initialization process can be stored in different locations such that the data can be re-used later on. It is preferred that the personal user data is stored on the UICC, which refers to a eUICC and/or iUICC likewise. Consequently, the secure element is implemented using specific hardware structures and a specific hardware architecture, which aims at protection of the very private data.

According to a further aspect of the present invention performing the initialization process comprises download of initialization commands. This provides the advantage that on a further device, such as the initialization system respective commands can be provided, which can remotely initialize the secure element or they can alternatively provide software components to be downloaded onto the secure element and/or the mobile device.

According to a further aspect of the present invention performing the initialization process comprises eSIM download or eSIM profile download. This provides the advantage, that existing hardware and software infrastructures can be used, which implement specific protocols. This represents a novel approach towards eSIM download as this is not performed using the commonly known approach involving passwords, but rather personal user data is used regarding eSIM download, which can be re-used even for further authentication processes. An eSIM profile can be adapted according to the personal user data being provided and accordingly not a commonly known eS-IM profile is downloaded but a specific, personalized eSIM profile is established under usage of the personal user data.

According to a further aspect of the present invention the stored personal user data is re-used for further software downloads. This provides the advantage that the provision of initialization commands is not exhaustive but rather any further software download can be authenticated likewise. For instance, a second eSIM download can be accomplished using the stored personal user data.

According to a further aspect of the present invention the eSIM real-time mechanism for secure eUICC authentication, profile generation, profile generation including ID data, and/or transport is re-used. This provides the advantage that the method according to the present invention can be seamlessly integrated into existing solutions and the initialization process has merely to be adapted such that personal user data can be used and furthermore such information is stored for further re-use. Hence, existing protocols can be amended, which can be performed at low technical effort thereby implementing the present invention.

According to a further aspect of the present invention an interface is provided for retrieval, presentation, and/or sending the provided personal user data. This provides the advantage that the personal user data can be forwarded to any application requiring authentication. Such an application can then perform user authentication together with the mobile devices, which accesses the secure element and retrieves the personal user data. According to this aspect it is possible to perform authentication of a specific user without any further input provided by the user. The user as such provides personal user data once, which can be re-used during the lifecycle of the mobile device.

According to a further aspect of the present invention providing personal user data is performed using an eSIM service, and interface to a network operator, and/or an API call. This provides the advantage that any party being involved in the initialization can contribute and especially an entity like the network operator can perform the initialization process thereby offering additional services.

According to a further aspect of the present invention performing the initialization process comprises personalizing the initialization process by means of considering the personal user data. This provides the advantage that the initialization process is customized such that not hardware-specific identifiers are used but rather user-specific identifiers. Consequently, the initialization of the UICC can be performed according to specific user requirements.

According to a further aspect of the present invention a personalized initialization software is provided by means of eSIM generation using the personal user data. This provides the advantage that a specific software or a specific profile can be implemented under usage of the personal user data. Consequently, the personal user data served for personalization of software commands, which remotely initialized the UICC, can be downloaded onto the mobile device for initialization of the UICC.

According to a further aspect of the present invention the personalized initialization software is provided as an eSIM profile download package. This provides the advantage that commonly known eSIM profile download packages can be re-used and they can be adapted in advance of the download such that they consider the personal user data. Accordingly, such passages can be personalized, such that the personalization can be re-used for further authentication processes.

According to a further aspect of the present invention the secure element is provided as an UICC, an eUICC, an iUICC and/or a SIM. This provides the advantage that commonly known hardware infrastructures and mobile devices can be re-used with low technical effort.

The problem is also solved by a system for efficient user authentications in a mobile network, comprising a interface unit being arranged to request an initialization of a secure element of a mobile device, a further interface unit being arranged to provide personal user data for authentication of an initialization process of the secure element and an initialization system being arranged to perform the initialization process upon positive authentication, wherein the personal user data provided for authentication of the initialization process is stored in the secure element and/ or in a storage of the mobile devices and re-used for further authentication processes.

The interface unit can be provided by a server, which provides the personalization commands, such as the software or the eSIM or eSIM profiles. Instead of using the initialization system the initialization of the end device, namely the mobile device, is performed by the mobile device on its own and the initialization system merely provides the respective initialization commands for download. The skilled person recognizes that even several servers can be involved.

The object is also solved by a computer program product being arranged to perform the suggested method, when being executed on a computer.

It is of advantage that the suggested system for efficient user authentication is arranged to operate the method for efficient user authentication and likewise the method is arranged to operate the system. Consequently, demonstrated method steps may be implemented as hardware structure of the respective system and the respective components of the system may be implemented as method steps. The computer program product is arranged to be performed on the suggested system and executes the suggested method when being performed on a respective system or computer.

In the following further advantages and details are provided by means of the accompanying figure, which shows:

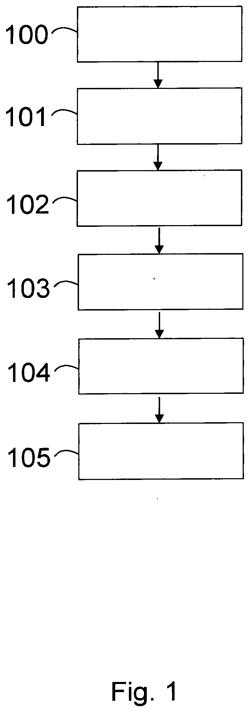

- Fig. 1:: a method for efficient user authentications in a mobile network according to an aspect of the present invention.

Fig. 1 shows a method for efficient user authentications in a mobile network, comprising the steps of requesting 100 an initialization of a secure element of a mobile device, providing 101 personal user data for authentication of an initialization process of the secure element, and performing 103 the initialization process upon positive authentication 102, wherein the personal user data provided for authentication of the initialization process is stored 104 and re-used 105 for further authentication processes.

The skilled person recognizes that the respective method steps can be performed iteratively and/or in a different order.

There is a need to identify users for mobile services and other services in may countries, e. g. India. This identification is costly, usually requires some identity data validation, biometric data scanning and face to face meetings. When (unbranded) phones with embedded eUICC and eSIM capabilities or with integrated iUICC capabilities are introduced in the market, the users need to identify themselves in order to get a subscription and a eSIM download.

This invention allows the user to re-use the identification once provided for eSIM download to other services or even further eSIM downloads. The eSIM real-time mechanism for secure eUICC or iUICC authentication, profile generation (incl. ID data), and transport, are used to provision the personal ID information and any UICC applications needed for ID use.
When the ID information is stored in the eUICC or the iUICC, it can be retrieved/presented/sent securely by the user, without any external systems requirements.

When the user is identified, using the required identification method, all the electrical ID provided (ID = picture, biometric, social security number, passport scan, passport number, etc.) can be securely incorporated into the eSIM and securely transmitted and stored in the eUICC or the iUICC of the identified user. This is done on demand and in real time. The user can now use 1, 2, or 3 factor authentication (ok, pin, fingerprint) to the UICC, allowing the UICC to securely transmit the above ID data and even approval signatures from previous authentications in order to avoid cumbersome re-authentication and provide the same authentication again to different service providers. This may be done with a simple feature phone or with a smartphone.

Since the inventor securely will prepare/prepares eSIM profiles on demand, eSIM can be extended to include real time ID information as well.

The initial ID data is retrieved by the eSIM systems directly itself (portal) or by the authenticating MNO during eSIM contract negotiation, and provided in API calls to the eSIM service. Then the ID data is sent to the eSIM generation (SM-DP) and incorporated in the eSIM profile download package.

Then the eSIM is downloaded by the customer and the eSIM is activated together with the ID data and its local eUICC ID application. From now on, the user can invoke the ID app on the eSIM to re-present either signed ID data or encrypted ID data to different 3rd party service providers and governments.

An alternative is that the first eSIM download is only used to provide ID and some extended ID provisioning connectivity (independently of the MNO normal service) and then the second download is actually the MNO/Service provider eSIM

The present invention provides at least the following technical advantages:
- The user can now use the eUICC or the iUICC and one single eSIM download (inc identification) to then re-use the same credentials for other services.
- The MNO can use the service to offer authentication services to its internal process, additional eSIM downloads, or other service providers.
- The government will have a cost efficient identification mechanism easily available in all eSIM devices.
- Infrastructure investments in biometrics scanning my be reduces to only some limited official places by 1. re-use of the eUICC stored ID data and in some cases 2. the use of the phone's biometrics scanning capabilities.

## Claims

1. A method for efficient user authentications in a mobile network, comprising the steps:
- requesting (100) an initialization of a secure element of a mobile device;
- providing (101) personal user data for authentication of an initialization process of the secure element; and
- performing (103) the initialization process upon positive authentication (102), **characterized in that** the personal user data provided for authentication of the initialization process is stored (104) and reused (105) for further authentication processes.

2. The method according to claim 1, **characterized in that** personal user information comprises a picture, a social security number, a passport scan, a passport number, a password, a fingerprint and/ or biometric data.

3. The method according to claim 1 or 2, **characterized in that** the personal user data is stored (104) on a server, the mobile device and/ or the secure element.

4. The method according to any one of the preceding claims, **characterized in that** performing (103) the initialization process comprises download of initialization commands.

5. The method according to claim 4, **characterized in that** performing (103) the initialization process comprises eSIM download and/ or eS-IM profile download.

6. The method according to any one of the preceding claims, **characterized in that** the stored (104) personal user data is reused for further software downloads and/or for further authentications.

7. The method according to any one of the preceding claims, **characterized in that** the eSIM real-time mechanism for secure eUICC authentication, profile generation, profile generation including ID data and/ or transport is reused (105).

8. The method according to any one of the preceding claims, **characterized in that** an interface is provided for retrieval, presentation and/ or sending the provided (101) personal user data.

9. The method according to any one of the preceding claims, **characterized in that** providing (101) personal user data is performed using an eSIM service, an interface to a network operator and/ or an API call.

10. The method according to any one of the preceding claims, **characterized in that** performing (103) the initialization process comprises personalizing the initialization process by means of considering the personal user data.

11. The method according to any one of the preceding claims, **characterized in that** a personalized initialization software is provided by means of eSIM generation using the personal user data.

12. The method according to claim 11, **characterized in that** the personalized initialization software is provided as an eSIM profile download package.

13. The method according to any one of the preceding claims, **characterized in that** the secure element is provided as an UICC, an eUICC, an iUICC and/ or a SIM.

14. A system for efficient user authentications in a mobile network, comprising:
- a first interface unit being arranged to request (100) an initialization of a secure element of a mobile device;
- a further interface unit being arranged to provide (101) personal user data for authentication of an initialization process of the secure element; and
- an initialization system being arranged to perform (103) the initialization process upon positive authentication (102), **characterized in that** the personal user data provided for authentication of the initialization process is stored (104) in the secure element and/or in a storage of the secure element of the mobile device and reused (105) for further authentication processes.

15. A computer program product being arranged to perform a method in accordance with any one of the preceding claims 1 to 13, when being executed on a computer.

## Amended claims

### Amended claims in accordance with Rule 137(2) EPC.

1. A method for efficient user authentications in a mobile network, comprising the steps:
- requesting (100) an initialization of a secure element of a mobile device;
- providing (101) personal user data comprising a passport number for authentication of an initialization process of the secure element; and
- performing (103) the initialization process upon positive authentication (102), **characterized in that** the personal user data provided for authentication of the initialization process is stored (104), and is therein stored on the secure element, and user data stored in the secure element is reused (105) for further authentication processes.

2. The method according to claim 1, **characterized in that** performing (103) the initialization process comprises download of initialization commands.

3. The method according to claim 2, **characterized in that** performing (103) the initialization process comprises eSIM download and/ or eSIM profile download.

4. The method according to any one of the preceding claims, **characterized in that** the stored (104) personal user data is reused for further software downloads and/or for further authentications.

5. The method according to any one of the preceding claims, **characterized in that** a eSIM real-time mechanism for secure eUICC authentication, profile generation, profile generation including ID data and/ or transport is reused (105).

6. The method according to any one of the preceding claims, **characterized in that** an interface is provided for retrieval, presentation and/ or sending the provided (101) personal user data.

7. The method according to any one of the preceding claims, **characterized in that** providing (101) personal user data is performed using an eSIM service, an interface to a network operator and/ or an API call.

8. The method according to any one of the preceding claims, **characterized in that** performing (103) the initialization process comprises personalizing the initialization process by means of considering the personal user data.

9. The method according to any one of the preceding claims, **characterized in that** a personalized initialization software is provided by means of eSIM generation using the personal user data.

10. The method according to claim 11, **characterized in that** the personalized initialization software is provided as an eSIM profile download package.

11. The method according to any one of the preceding claims, **characterized in that** the secure element is provided as an UICC, an eUICC, an iUICC and/ or a SIM.

12. A system for efficient user authentications in a mobile network, comprising:
- a first interface unit being arranged to request (100) an initialization of a secure element of a mobile device;
- a further interface unit being arranged to provide (101) personal user data comprising a passport number for authentication of an initialization process of the secure element; and
- an initialization system being arranged to perform (103) the initialization process upon positive authentication (102), **characterized in that** the personal user data provided for authentication of the initialization process is stored (104) in the secure element and/or in a storage of the secure element of the mobile device and reused (105) for further authentication processes.

13. A computer program product being arranged to perform a method in accordance with any one of the preceding claims 1 to 11, when being executed on a computer.
